# EUROPÄISCHE PATENTSCHRIFT

(11) **EP 3 606 822 B1**
(45) Veröffentlichungstag und Bekanntmachung des Hinweises auf die Patenterteilung: **06.09.2023**
(21) Anmeldenummer: 18715667.4
(22) Anmeldetag: 03.04.2018
(51) Int. Cl.: B64D 11/06, B60N 2/66

(54) **FLUGZEUGSITZVORRICHTUNG**
AIRCRAFT SEATING DEVICE
DISPOSITIF DE SIÈGE D'AVION

(30) Priorität: 03.04.2017 DE 102017107154
(43) Veröffentlichungstag der Anmeldung: 12.02.2020
(73) Patentinhaber: Recaro Aircraft Seating GmbH & Co. KG, 74523 Schwäbisch Hall (DE)
(72) Erfinder: ITZINGER, Andreas, 74545 Michelfeld (DE); TUTE, Christopher, 67808 Schönborn (DE); HORLACHER, Michael, 74523 Schwäbisch Hall (DE); PARRILLA CALLE, Javier, 70188 Stuttgart (DE)
(74) Vertreter: Daub, Thomas
(86) Internationale Anmeldenummer: PCT/EP2018/058496
(87) Internationale Veröffentlichungsnummer: WO 2018/185106

(56) Entgegenhaltungen:
- EP-A1- 0 016 937
- EP-A1- 3 095 700
- EP-A2- 2 301 795
- WO-A1-2012/135250
- GB-A- 2 460 472
- US-A- 5 092 655

## Beschreibung

### Stand der Technik

Die Erfindung betrifft eine Flugzeugsitzvorrichtung nach dem Oberbegriff des Patentanspruchs 1. So eine Flugzeugsitzvorrichtung ist aus der WO2012135250A bekannt.

Es ist bereits eine Flugzeugsitzvorrichtung mit wenigstens einer Aufständereinheit, einem mit der Aufständereinheit verbundenen Sitzboden und mit einer Rückenlehne, die zwischen einer Sitzstellung und einer Komfortstellung verschwenkbar ist, vorgeschlagen worden.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Flugzeugsitzvorrichtung mit den Merkmalen des Anspruchs 1, vorgeschlagen. Unter einer "Flugzeugsitzvorrichtung" soll dabei insbesondere eine Vorrichtung verstanden werden, die zumindest einen Teil eines Flugzeugsitzes oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Aufständereinheit" soll dabei insbesondere eine Einheit verstanden werden, über die der Flugzeugsitz fest mit einem Kabinenboden gekoppelt ist und dazu insbesondere wenigstens einen Sitzfuß, der über eine Befestigungsschiene fest mit dem Kabinenboden gekoppelt ist, und wenigstens ein mit dem Sitzfuß verbundenes Querelement aufweist, an dem zumindest ein Sitzteiler und/oder ein Sitzboden des Flugzeugsitzes angebunden ist. Unter einem "Sitzboden" soll dabei insbesondere ein Bauteil eines Flugzeugsitzes verstanden werden, das einen Sitzbereich für einen Passagier ausbildet, wobei der Sitzboden dabei vorzugsweise von einem Grundkörper und einer auf dem Grundkörper angebrachten Polstereinheit gebildet ist. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Unter einer "Rückenlehne" soll dabei insbesondere ein Element des Flugzeugsitzes verstanden werden, das zumindest einen Teil einer Rückenlehnenauflagefläche ausbildet, an der ein auf dem Flugzeugsitz sitzender Passagier seinen Rücken anlehnen kann. Dabei umfasst die Rückenlehne vorzugsweise zumindest einen Grundkörper und eine Polstereinheit, welche die Rückenlehnenauflagefläche ausbildet. Die Rückenlehne weist vorzugsweise einen tragenden Rahmen auf, über den die Rückenlehne mit der Aufständereinheit und/oder dem Sitzboden verbunden ist. Ein Rahmen der Rückenlehne kann dabei als ein umlaufender Rahmen, beispielsweise aus einem Leichtmetall, sein oder einstückig mit dem Rest der Rückenlehne aus einem selbsttragenden Faserverbundwerkstoff gebildet sein. Die Rückenlehne ist dabei an einem hinteren Ende der Sitzbodeneinheit angeordnet und erstreckt sich von der Sitzbodeneinheit nach oben, von einer Aufständereinheit weg. Grundsätzlich ist es auch denkbar, dass die Rückenlehne als ein selbsttragendes Integralbauteil aus einem Faserverbundwerkstoff gebildet ist. Unter einer "Sitzstellung der Rückenlehne" soll dabei insbesondere eine aufrechte Position der Rückenlehne verstanden werden, in der die Rückenlehne im Wesentlichen senkrecht zu einer Aufständerebene ausgerichtet ist, auf der der Flugzeugsitz aufgeständert ist. Die Sitzstellung der Rückenlehne ist dabei insbesondere als eine TTL-Stellung der Rückenlehne ausgebildet. Unter einer "Komfortstellung der Rückenlehne" soll dabei insbesondere eine Stellung der Rückenlehne verstanden werden, in der diese aus der TTL-Stellung nach hinten verschwenkt ist und eine Neigung zu der Aufständerebene aufweist. In der Komfortstellung ist die Rückenlehne dabei so ausgerichtet, um einem Passagier eine vorteilhaft komfortable, nicht aufrechte Sitzstellung zu ermöglichen.

Unter einer "Sitzstellung des Sitzbodens" soll dabei insbesondere eine Stellung des Sitzbodens verstanden werden, in der der Sitzboden maximal in Richtung der Rückenlehne verschoben ist. Die Sitzstellung des Sitzbodens entspricht dabei einer TTL-Stellung des Sitzbodens. Der Sitzboden weist vorzugsweise insbesondere zumindest zwei Komfortstellungen auf. Unter einer "ersten Komfortstellung des Sitzbodens" soll dabei insbesondere eine Stellung des Sitzbodens verstanden werden, bei der der Sitzboden aus der Sitzstellung heraus um einen vorderen Querträger geschwenkt ist. Die erste Komfortstellung nimmt der Sitzboden dabei vorzugsweise durch eine Kopplung mit der Rückenlehne ein wenn die Rückenlehne von ihrer Sitzstellung in ihre Komfortstellung verstellt wird. Unter einer zweiten Komfortstellung soll dabei insbesondere eine Stellung des Sitzbodens verstanden werden, bei der der Sitzboden aus der Sitzstellung oder seiner ersten Komfortstellung heraus nach vorne verschoben ist. Der Sitzboden ist dabei in der zweiten Komfortstellung um zumindest 20 mm, vorzugsweise um 35 mm und in einer besonders vorteilhaften Ausgestaltung um zumindest 50 mm zu der Sitzstellung nach vorne verschoben. Unter einem "unteren Rückenlehnenelement" soll dabei insbesondere ein Element verstanden werden, das zumindest einen unteren Bereich der Rückenlehnenabstützfläche ausbildet, an dem sich ein Passagier mit dem Rücken abstützen kann, insbesondere einen Bereich von einem Lendenwirbelbereich bis zu einem unteren Ende der Rückenlehne an einem Übergang zu dem Sitzboden. Das untere Rückenlehnenelement erstreckt sich in einem montierten Zustand zwar vorzugsweise bis in einen Schulterbereich der Rückenlehne, jedoch ist das untere Rückenlehnenelement in einem Bereich oberhalb des Lendenwirbelbereichs im Wesentlichen immer parallel zu der Rückenlehne angeordnet und verändert in diesem Bereich deshalb eine Form der Rückenlehnenabstützfläche nicht. Unter "zumindest verschwenkbar" soll dabei insbesondere verstanden werden, dass ein Element, insbesondere das untere Rückenlehnenelement, zumindest zu einem weiteren Element, wie insbesondere der Rückenlehne, geschwenkt werden kann, also dass sich eine Neigung des unteren Rückenlehnenelements zu der Rückenlehne verstellen lässt, aber das Element zusätzlich auch linear verschiebbar zu dem weiteren Element gelagert sein kann. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Flugzeugsitzvorrichtung für einen Flugzeugsitz bereitgestellt werden, die besonders ergonomisch einstellbar ist und besonders komfortabel für einen Passagier ist.

Unter "führungselementlos gelagert" soll dabei insbesondere verstanden werden, dass das untere Rückenlehnenelement lediglich durch Aufliegen auf einer Fläche der Rückenlehne, insbesondere auf einer nach vorne gerichteten Fläche einer Rückwandung der Rückenlehne, gelagert ist. Es ist dabei denkbar, dass das untere Rückenlehnenelement zumindest in einem Kontaktbereich mit der Rückenlehne von einer Tasche umgeben ist, die eine Reibung zwischen dem Rückenlehnenelement und der Rückenlehne verringert, um insbesondere die Rückenlehne und/oder das Rückenlehnenelement vor einer Abnutzung zu schützen, wobei die Tasche dabei keine Führungsfunktion ausübt. Insbesondere weist die Rückenlehne keine festen Lagereinheiten, wie beispielsweise Linearlager, auf, über die das untere Rückenlehnenelement fest zu der Rückenlehne geführt ist. Das untere Rückenlehnenelement ist im Wesentlichen frei zu der Rückenlehne gelagert und lediglich durch die Anlage an der Rückenlehne geführt. Dadurch kann das untere Rückenlehnenelement besonders einfach an der Rückenlehne gelagert werden. Ferner wird vorgeschlagen, dass die Flugzeugsitzvorrichtung eine Linearlagereinheit aufweist, mittels der der Sitzboden zur Ausbildung der Sitzstellung und der wenigstens zwei Komfortstellungen zwischen zwei Stellungen linear verschiebbar ist. Unter einer "Linearlagereinheit" soll dabei insbesondere eine Einheit aus wenigstens zwei korrespondierend zueinander ausgebildeten Führungselementen, wie beispielsweise zwei Führungsschienen, verstanden werden, die entlang einer Lagerbahn zueinander verschiebbar sind. Dabei kann die Lagerbahn der Linearlagereinheit von einer geraden Lagerachse gebildet sein, als auch eine gekrümmte Bahn. Dadurch kann der Sitzboden besonders vorteilhaft ausgebildet werden und die Flugzeugsitzvorrichtung besonders komfortabel ausgebildet sein.

Es wird weiterhin vorgeschlagen, dass das untere Rückenlehnenelement direkt mit dem Sitzboden gekoppelt ist. Unter "direkt gekoppelt" soll dabei insbesondere verstanden werden, dass eine Bewegung des Sitzbodens auf das untere Rückenlehnenelement übertragen wird. Insbesondere soll unter "direkt gekoppelt" verstanden werden, dass das untere Rückenlehnenelement direkt oder über ein Verbindungselement oder eine Mechanik mit dem Sitzboden verbunden ist. Dadurch kann die Flugzeugsitzvorrichtung besonders vorteilhaft komfortabel ausgebildet werden.

Des Weiteren wird vorgeschlagen, dass das untere Rückenlehnenelement dazu vorgesehen ist, linear zu der Rückenlehne verschoben zu werden. Dadurch kann das untere Rückenelement besonders vorteilhaft zu der Rückenlehne gelagert werden, um besonders vorteilhafte Sitz- und/oder Komfortstellungen zu generieren.

Weiterhin wird vorgeschlagen, dass das untere Rückenlehnenelement dazu vorgesehen ist, durch eine Verstellung des Sitzbodens zwischen seiner Sitzstellung und der wenigstens einen Komfortstellung mit verstellt zu werden. Unter "durch eine Verstellung des Sitzbodens" soll dabei insbesondere verstanden werden, dass das untere Rückenlehnenelement, insbesondere durch die direkte Koppelung zwischen Rückenlehnenelement und Sitzboden, bei einer Verstellung des Sitzbodens mitgenommen und dadurch automatisch mit verstellt wird. Dadurch kann das untere Rückenelement besonders einfach verstellt werden.

Außerdem wird vorgeschlagen, dass der Sitzboden und die Rückenlehne zumindest teilweise unabhängig voneinander zwischen ihren Sitzstellungen und ihren Komfortstellungen verstellbar sind. Unter "zumindest teilweise unabhängig verstellbar" soll dabei insbesondere verstanden werden, dass eine Verstellung des Sitzbodens und eine Verstellung der Rückenlehne zwischen ihren jeweiligen Sitzstellungen und Komfortstellungen getrennt voneinander erfolgen, wobei die jeweilige Verstellung der Rückenlehne oder des Sitzbodens vorzugsweise durch einen separaten Auslösemechanismus freigegeben wird. Grundsätzlich ist es auch denkbar, dass eine Verstellung des Sitzbodens und der Rückenlehne zumindest teilweise zeitgleich stattfinden. Dadurch können die Rückenlehne und der Sitzboden besonders vorteilhaft individuell eingestellt werden, um einen Komfort für einen Passagier vorteilhaft zu erhöhen.

Es wird weiter vorgeschlagen, dass die Flugzeugsitzvorrichtung wenigstens ein Federelement aufweist, das dazu vorgesehen ist, eine Kraft auf den Sitzboden auszuüben, die dazu vorgesehen ist, eine Verstellung des Sitzbodens in Richtung einer zweiten Komfortstellung zu unterstützen. Dadurch kann der Sitzboden besonders vorteilhaft einfach in die Komfortstellung verstellt werden.

Zudem wird vorgeschlagen, dass die Flugzeugsitzvorrichtung wenigstens ein Rückwandelement aufweist, das beweglich mit dem Sitzboden und/oder dem unteren Rückenlehnenelement gekoppelt ist. Unter einem "Rückwandelement" soll dabei insbesondere ein Element verstanden werden, das die Rückenlehne zumindest in dem Bereich des unteren Rückenlehnenelements nach hinten, insbesondere in Richtung eines dahinter angeordneten weiteren Flugzeugsitzes, hin begrenzt. Das Rückwandelement ist dabei vorzugsweise als eine geformte Platte ausgebildet und beispielsweise aus einem Kunststoff oder einem Faserverbundwerkstoff gebildet. Dabei ist es denkbar, dass an dem Rückwandelement Funktionselemente für einen hinteren Flugzeugsitz angeordnet sind, wie beispielsweise ein Aufbewahrungsnetz. Dadurch kann die Flugzeugsitzvorrichtung in dem Bereich des unteren Rückenlehnenelements besonders vorteilhaft nach hinten abgeschlossen werden.

Ferner wird vorgeschlagen, dass das Rückwandelement einstückig mit dem unteren Rückenlehnenelement ausgebildet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter "einstückig" soll in diesem Zusammenhang insbesondere von demselben Element gebildet verstanden werden. Das Rückwandelement und das untere Rückenlehnenelement sind dabei von einem Element gebildet, sodass das untere Rückenlehnenelement das Rückwandelement ausbildet. Das untere Rückenlehnenelement bildet dadurch das Element aus, das die Rückenlehne in dem Bereich des unteren Rückenlehnenelements nach hinten begrenzt. Dadurch kann vorteilhaft erreicht werden, dass der Flugzeugsitz in dem Bereich des unteren Rückenlehnenelements besonders vorteilhaft schmal ausgebildet sein kann und insbesondere in einer Komfortstellung des Sitzbodens ein Bereich hinter dem Flugzeugsitz vergrößert werden kann.

Es wird weiterhin vorgeschlagen, dass der Sitzboden wenigstens ein Komfortkissen umfasst, das eine Sitzfläche ausbildet und dazu zumindest in einem vorderen Bereich einen erhöhten Mittelbereich und flacher ausgebildete Seitenbereiche aufweist. Unter einem "Komfortkissen" soll dabei insbesondere ein Kissen verstanden werden, das die Sitzfläche des Sitzbodens ausbildet, auf der ein Passagier sitzt und der insbesondere vorteilhaft ergonomisch ausgebildet ist. Dadurch kann vorteilhaft eine Sitzfläche erzeugt werden, die besonders komfortabel ist.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Sitzreihe mit einem Flugzeugsitz mit einer erfindungsgemäßen Flugzeugsitzvorrichtung in einem ersten Ausführungsbeispiel,
- Fig. 2: eine Seitenansicht des Flugzeugsitzes mit einem Sitzboden, einer Rückenlehne und einem unteren Rückenlehnenelement jeweils in einer Sitzstellung,
- Fig. 3: eine schematische Ansicht des Sitzbodens und des damit gekoppelten unteren Rückenlehnenelements,
- Fig. 4: eine stark schematisierte Seitenansicht des Flugzeugsitzes mit dem Sitzboden, der Rückenlehne und dem unteren Rückenlehnenelement jeweils in einer Sitzstellung,
- Fig. 5: eine stark schematisierte Seitenansicht des Flugzeugsitzes mit dem Sitzboden, der Rückenlehne und dem unteren Rückenlehnenelement jeweils in einer ersten Komfortstellung
- Fig. 6: eine stark schematisierte Seitenansicht des Flugzeugsitzes mit dem Sitzboden, der Rückenlehne und dem unteren Rückenlehnenelement jeweils in einer zweiten, maximalen Komfortstellung,
- Fig. 7: eine schematische Ansicht einer Linearlagereinheit zur Lagerung des Sitzbodens,
- Fig. 8: eine schematische Ansicht des Sitzbodens mit einem Komfortkissen,

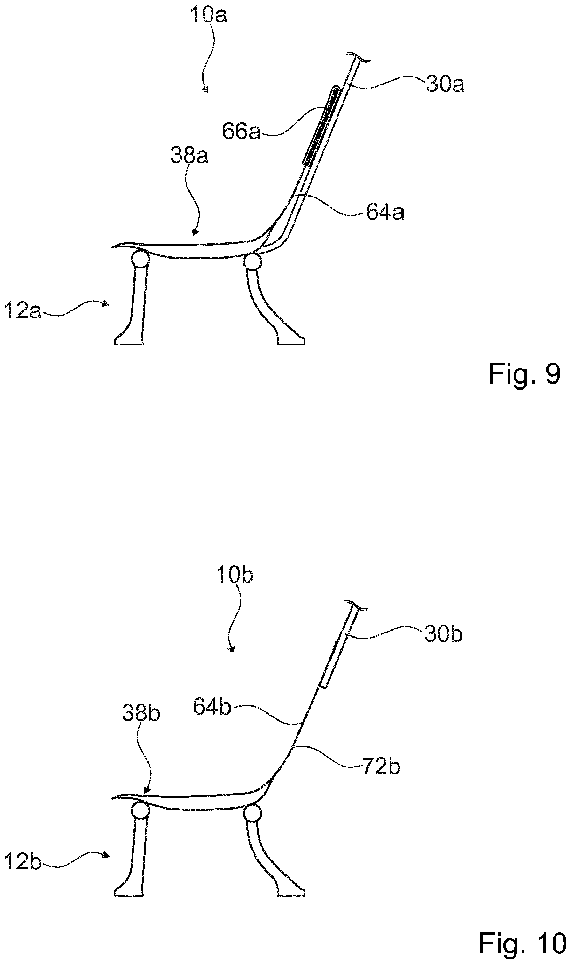

- Fig. 9: eine schematische Schnittansicht des unten Rückenelements und eines Taschenelements und
- Fig. 10: eine schematische Seitenansicht einer Flugzeugsitzvorrichtung in einem zweiten Ausführungsbeispiel.

### Beschreibung der Ausführungsbeispiele

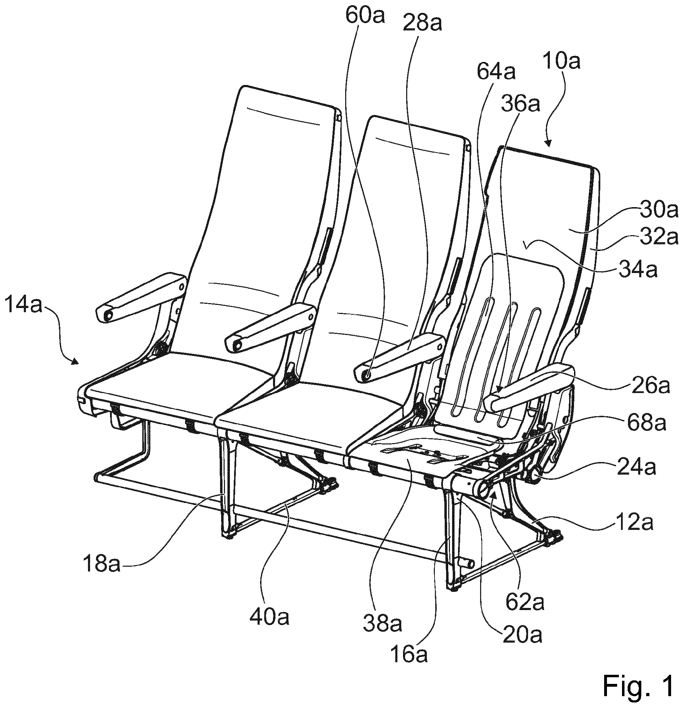

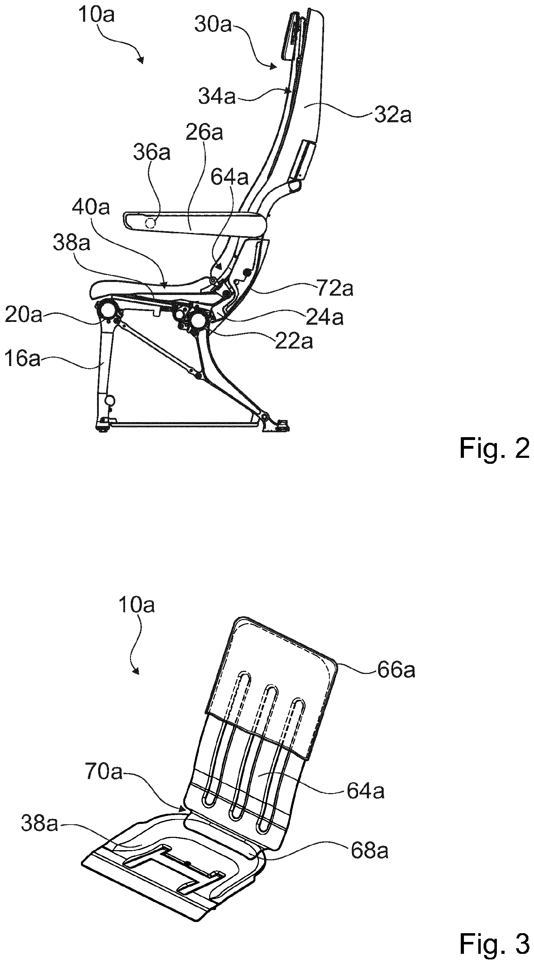

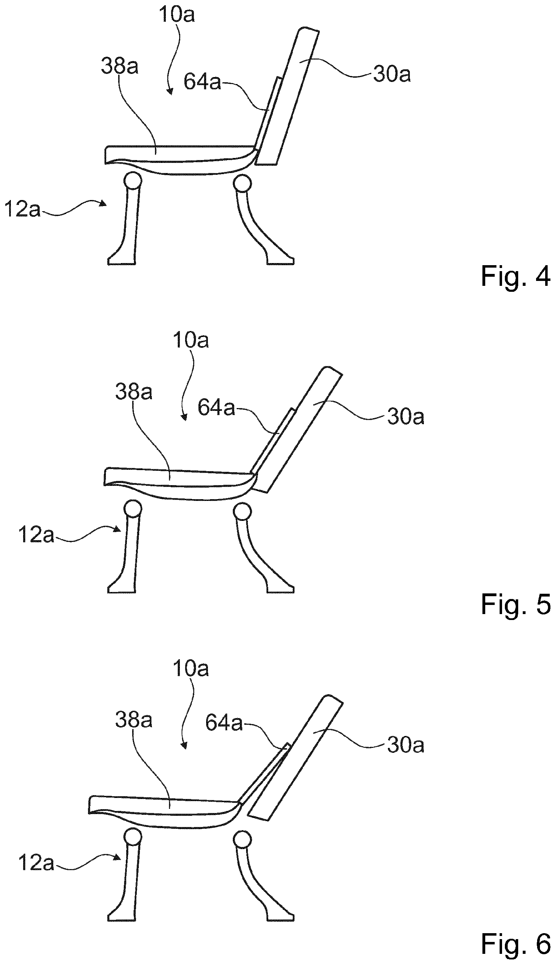

Die Figuren 1 bis 7 zeigen ein erstes Ausführungsbeispiel einer erfindungsgemäßen Flugzeugsitzvorrichtung. Die Flugzeugsitzvorrichtung ist als ein Teil eines Flugzeugsitzes 10a ausgebildet. Die Flugzeugsitzvorrichtung umfasst eine Aufständereinheit 12a, mittels der der Flugzeugsitz 10a auf einem Kabinenboden einer Flugzeugkabine angebracht ist. Der Flugzeugsitz 10a ist dabei als Teil einer Sitzreihe 14a ausgebildet. Die Sitzreihe 14a weist dabei drei nebeneinander angeordnete Flugzeugsitze 10a auf. Grundsätzlich ist es auch denkbar, dass die Sitzreihe eine andere Anzahl an nebeneinander angeordneten Flugzeugsitzen aufweist. Mittels der Aufständereinheit sind alle Flugzeugsitze 10a einer Sitzreihe 14a mit dem Kabinenboden gekoppelt. Mittels der Aufständereinheit 12a ist der Flugzeugsitz 10a auf einer Aufständerebene aufständerbar. Der Kabinenboden bildet die Aufständerebene aus. Die Aufständereinheit 12a weist Sitzfüße 16a, 18a auf, die zur Montage in der Flugzeugkabine über Verbindungselemente mit Führungsschienen in dem Kabinenboden fest verbunden sind. Die Flugzeugsitzvorrichtung umfasst zwei Querträger 20a, 22a. Die Querträger 20a, 22a sind als Tragrohre ausgebildet. Die Querträger 20a, 22a sind mit der Aufständereinheit 12a verbunden und verlaufen in Querrichtung der Sitzreihe 14a. Die Querträger 20a, 22a erstrecken sich über alle Flugzeugsitze 10a der Sitzreihe 14a. Grundsätzlich wäre es auch denkbar, dass die Flugzeugsitzvorrichtung eine andere Anzahl an Querträgern 20a, 22a aufweist, beispielsweise einen einzelnen Querträger. Der beschriebene Flugzeugsitz 10a ist beispielhaft als ein äußerer Sitz der Sitzreihe 12a ausgebildet. Grundsätzlich ist es auch denkbar, dass der Flugzeugsitz 10a als ein anderer Sitz der Sitzreihe 12a ausgebildet ist. Die Flugzeugsitzvorrichtung umfasst zwei Sitzteiler 24a, die den Flugzeugsitz 10a seitlich begrenzen. Die Sitzteiler 24a sind mit den Querträgern 20a, 22a verbunden. Die Sitzteiler 22a sind dabei im Wesentlichen dem Stand der Technik entsprechend ausgebildet und deshalb hier nicht näher beschrieben. Die Flugzeugsitzvorrichtung umfasst zwei Armlehnen 26a, 28a. Die Armlehnen 26a, 28a sind jeweils an einem Sitzteiler 24a der Flugzeugsitzvorrichtung angebracht. Die Armlehnen 26a, 28a sind jeweils verschwenkbar an dem entsprechenden Sitzteiler 24a gelagert. Die eine Armlehne 26a ist dabei als eine äußere Armlehne der Sitzreihe 14a ausgebildet. Die andere Armlehne 28a ist als eine innere Armlehne der Sitzreihe 14a ausgebildet und zwischen dem Flugzeugsitz 10a und dem benachbarten Flugzeugsitz der Sitzreihe 14a angeordnet.

Die Flugzeugsitzvorrichtung umfasst eine Rückenlehne 30a. Die Rückenlehne 30a ist an einem hinteren Ende des Flugzeugsitzes 10a angeordnet. Die Rückenlehne 30a bildet zumindest einen Teil einer Rückenlehnenfläche aus, an der sich ein auf dem Flugzeugsitz 10a sitzender Passagier mit seinem Rücken anlehnen kann. Die Rückenlehne 30a bildet einen Rahmen 32a aus. Der Rahmen 32a ist dabei im Wesentlichen U-förmig ausgebildet und an einem geöffneten Ende mit der Aufständereinheit 12a gekoppelt. Die Rückenlehne 30a weist eine Rückwand 34a auf. Die Rückwand 34a ist mit dem Rahmen 32a verbunden und überspannt einen inneren Bereich des Rahmens 32a. Die Rückwand 34a der Rückenlehne 30a ist dabei aus einem Kunststoff gebildet. Grundsätzlich ist es auch denkbar, dass die Rückwand aus einem anderen, dem Fachmann als sinnvoll erscheinenden Material, wie beispielsweise aus einem Faserverbundwerkstoff gebildet ist. Auf einer Rückseite bildet die Rückwand 34a der Rückenlehne 30a Funktionselemente für einen hinter dem Flugzeugsitz 10a angeordneten weiteren Flugzeugsitz aus, wie beispielsweise eine Literaturtasche. An einem oberen Ende bildet die Rückenlehne 30a einen Kopfbereich aus. Es ist dabei denkbar, dass in dem Kopfbereich ein Kopfstützelement angeordnet ist. Die Rückenlehne 30a weist eine Bespannung auf. Die Bespannung ist von einem Textil gebildet, das auf den Rahmen 32a der Rückenlehne 30a aufgespannt ist. Die Bespannung bildet dabei zumindest teilweise eine Anbindungsfläche für eine Polstereinheit der Rückenlehne 30a aus. Die Rückenlehne 30a ist verschwenkbar mit der Aufständereinheit 12a verbunden. Die Rückenlehne 30a ist dabei zwischen einer Sitzstellung und einer Komfortstellung verstellbar. In der Sitzstellung ist die Rückenlehne 30a im Wesentlichen senkrecht zu dem Kabinenboden ausgerichtet. In der Sitzstellung ist die Rückenlehne 30a so ausgerichtet, dass ein Passagier aufrecht in dem Flugzeugsitz 10a sitzt. Die Sitzstellung der Rückenlehne 30a entspricht einer TTL-Stellung des Flugzeugsitzes 10a. In der Komfortstellung ist die Rückenlehne 30a aus der Sitzstellung herausgeschwenkt und zu einer senkrecht auf der Aufständerebene stehenden Achse geneigt. Die Rückenlehne 30a ist in der Komfortstellung aus der Sitzstellung mit einem oberen Ende nach hinten geschwenkt. In der Komfortstellung weist die Rückenlehne 30a eine Neigung von 14 Grad zu der Aufständerebene aus. Die Rückenlehne 30a ist über eine nicht näher dargestellte Lagerung zu der Aufständereinheit 12a verschwenkbar. Die Rückenlehne ist dabei vorzugsweise über die Sitzteiler 24a schwenkbar zu der Aufständereinheit 12a gelagert. Im Wesentlichen ist die Lagerung der Rückenlehne 30a zu der Aufständereinheit 12a äquivalent zu aus dem Stand der Technik bekannten Rückenlehnenlagerungen ausgebildet und deswegen hier nicht näher beschrieben. Die Rückenlehne 30a ist stufenlos zwischen der Sitzstellung und einer maximalen Komfortstellung verstellbar. Dabei ist die Rückenlehne 30a in jeder Stellung arretierbar. Zur Arretierung der Rückenlehne 30a weist die Flugzeugsitzvorrichtung eine nicht näher dargestellte Arretiervorrichtung auf. Die Arretiervorrichtung ist dazu vorgesehen, von einem auf dem Flugzeugsitz 10a sitzenden Passagier betätigt zu werden. Die Flugzeugsitzvorrichtung weist ein Betätigungselement 36a auf, mittels dessen ein Passagier die Arretiervorrichtung betätigen kann. Betätigt ein Passagier das Betätigungselement 36a, wird die Arretiervorrichtung entriegelt und die Rückenlehne 30a kann zwischen der Sitzstellung und der maximalen Komfortstellung verschwenkt werden. Eine Verschwenkung der Rückenlehne 30a erfolgt dabei durch Gewichtsverlagerung des Passagiers. Grundsätzlich ist es auch denkbar, dass eine Verschwenkung der Rückenlehne 30a durch eine Aktuatorik erfolgt. Das Betätigungselement 36a ist als ein Druckknopf ausgebildet. Das Betätigungselement 36a ist in der einen Armlehne 26a angebracht. Das Betätigungselement 36a ist über einen nicht näher dargestellten Bowdenzug mit der Arretiervorrichtung gekoppelt. Grundsätzlich ist es auch denkbar, dass die Arretiervorrichtung auf eine andere Weise mit dem Betätigungselement 36a gekoppelt ist.

Die Flugzeugsitzvorrichtung weist einen Sitzboden 38a auf. Der Sitzboden 38a bildet einen Sitzbereich 40a für einen Passagier des Flugzeugsitzes 10a aus. Der Sitzboden 38a ist mit der Aufständereinheit 12a gekoppelt. Der Sitzboden 38a ist dabei verstellbar zu der Aufständereinheit 12a angebunden. Der Sitzboden 38a ist dazu vorgesehen, zwischen einer Sitzstellung und einer ersten Komfortstellung und einer zweiten Komfortstellung verstellbar gelagert zu werden. In einer Sitzstellung ist der Sitzboden 38a maximal nach hinten verstellt. In der Sitzstellung ist der Sitzboden 38a maximal in Richtung der Rückenlehne 30a verstellt. In der Sitzstellung ist der Sitzboden 38a im Wesentlichen parallel zu der Aufständerebene ausgerichtet. Grundsätzlich ist es auch denkbar, dass der Sitzboden 38a in der Sitzstellung leicht zu der Aufständerebene geneigt ist. In der ersten Komfortstellung ist der Sitzboden 38a aus der Sitzstellung heraus um den vorderen Querträger 20a geschwenkt. Zur schwenkbaren Lagerung weist der Sitzboden 38a zwei Lagerelemente 84a, 86a auf. Die Lagerelemente 84a, 86a sind zur Lagerung mit dem vorderen Querträger 20a vorgesehen. Die Lagerelemente 84a, 86a sind dabei an einer Unterseite eines Trägers 88a angeordnet, der den Sitzboden 38a zumindest teilweise trägt. Grundsätzlich wäre es auch denkbar, dass die Lagerelemente 84a, 86a direkt an einer Unterseite des Sitzbodens 38a angebunden sind. Über die Lagerelemente 84a, 86a ist der Sitzboden 38a um einen Schwenkbereich um den vorderen Querträger 20a gelagert. Der Sitzboden 38a ist im Vergleich zu der Sitzstellung mit einem vorderen Ende leicht nach oben verschwenkt. Dabei wird der Sitzboden 38a aus seiner Sitzstellung heraus zusammen mit der Rückenlehne 30a verstellt. Ist die Rückenlehne 30a in ihrer Komfortstellung ist der Sitzboden 38a in seiner ersten Komfortstellung angeordnet. Der Sitzboden 38a in der Komfortstellung und die Rückenlehne 30a in der Komfortstellung bilden zusammen eine erste Komfortstellung des Flugzeugsitzes 10a aus. Diese erste Komfortstellung des Flugzeugsitzes 10a entspricht einer aus dem Stand der Technik bekannten Komfortstellung von Flugzeugsitzen, die eine schwenkbare Rückenlehne und einen Sitzboden aufweisen, die bewegungstechnisch miteinander gekoppelt sind. Der Sitzboden weist eine zweite Komfortstellung auf, in der der Sitzboden 38a linear zu seiner Sitzstellung und seiner ersten Komfortstellung verschoben ist. In der zweiten Komfortstellung ist der Sitzboden 38a um wenigstens 50 mm von der Sitzstellung oder der ersten Komfortstellung in Sitzrichtung nach vorne verschoben. Dabei ist der Sitzboden 38a sowohl aus seiner Sitzstellung, also wenn die Rückenlehne 30a ebenfalls in ihrer Sitzstellung angeordnet ist, als auch aus seiner ersten Komfortstellung, also wenn die Rückenlehne 30a ebenfalls in ihrer Komfortstellung angeordnet ist, in eine zweite Stellung linear verschiebbar.

Die Flugzeugsitzvorrichtung umfasst eine Linearlagereinheit 42a, mittels der der Sitzboden 38a verschiebbar gelagert ist. Mittels der Linearlagereinheit 42a ist der Sitzboden zwischen zwei Stellungen verschiebbar. Eine erste Stellung in der der Sitzboden 38a mittels der Linearlagereinheit 42a angeordnet werden kann entspricht der Sitzstellung bzw. der ersten Komfortstellung des Sitzbodens. In dieser ersten Stellung ist der Sitzboden 38a maximal an der Rückenlehne 30a angeordnet. Eine zweite Stellung in der der Sitzboden 38a mittels der Linearlagereinheit 42a angeordnet werden kann entspricht der zweiten Komfortstellung des Sitzbodens 38a, in der der Sitzboden 38a um 50 mm in Sitzrichtung nach vorne verschoben ist. Die zweite Stellung des Sitzbodens 38a, in der er um 50 mm aus der ersten Komfortstellung herausbewegt ist, ist dabei als eine maximale Komfortstellung ausgebildet. Die Linearlagereinheit 42a umfasst zwei erste Führungsschienen 44a, 46a, die mit der Aufständereinheit 12a gekoppelt sind. Die Führungsschienen 44a, 46a sind verschwenkbar mit der Aufständereinheit 12a gekoppelt. Dabei sind die Führungsschienen 44a, 46a insbesondre mit einer Mechanik zur Verstellung des Sitzbodens 38a zwischen seiner Sitzstellung und der ersten Komfortstellung gekoppelt. Die Führungsschienen 44a, 46a sind mit den Querträgern 20a, 22a verbunden. Die Führungsschienen 44a, 46a sind auf dem Träger 88a angebracht, der über die Lagerelemente 84a, 86a verschwenkbar zu dem vorderen Querträger 20a gelagert ist. Dadurch ist die Linearlagereinheit 42a zusammen mit dem Sitzboden 38a zwischen der Sitzstellung und der ersten Komfortstellung zu der Aufständereinheit 12a verschwenkbar. Die Führungsschienen 44, 46 sind in Sitzrichtung des Sitzes parallel und in einer Querrichtung des Flugzeugsitzes 10a beabstandet zueinander angeordnet. Die Linearlagereinheit 42a weist zwei mit dem Sitzboden 38a verbundene zweite Führungsschienen 48a, 50a auf, die formschlüssig mit den ersten Führungsscheinen 44a, 46a verbunden sind. Die Führungsscheinen 48a, 50a sind linear entlang einer Bewegungsbahn zu den ersten Führungsschienen 44a, 46a verschiebbar. Die Bewegungsbahn ist dabei als eine Gerade ausgebildet. Dadurch wird der Sitzboden 38a bei einer Verstellung mittels der Linearlagereinheit 42a entlang der Bewegungsbahn, ohne Verstellung einer Neigung des Sitzbodens 38a, verstellt. Grundsätzlich ist es auch denkbar, dass die Bewegungsbahn zumindest in einem Teilbereich eine Krümmung aufweist.

Die Flugzeugsitzvorrichtung weist eine Sitzbodenverriegelung 52a auf. Die Sitzbodenverriegelung 52a ist dazu vorgesehen, den Sitzboden 38a in jeder Stellung in der er mittels der Linearlagereinheit 42a angeordnet werden kann zu fixieren. Der Sitzboden 38a ist mittels der Sitzbodenverriegelung 52a zwischen seiner Sitzstellung bzw. der ersten Komfortstellung und seiner zweiten, maximalen Komfortstellung fixierbar. Die Sitzbodenverriegelung 52a ist dazu vorgesehen, den Sitzboden 38a zu der Aufständereinheit 12a zu fixieren. Die Sitzbodenverriegelung 52a weist ein Führungselement 54a auf, das starr mit dem Sitzboden 38a gekoppelt ist. Das Führungselement 54a ist an einer Unterseite des Sitzbodens 38a angeordnet. Das Führungselement 54a ist als ein Rundstab ausgebildet. Die Sitzbodenverriegelung 52a weist eine Verriegelungsfeder 56a auf. Die Verriegelungsfeder 56a umschließt das Führungselement 54a. Die Verriegelungsfeder 56a ist als eine Schlingfeder ausgebildet. Die Verriegelungsfeder 56a ist mittels eines Gehäuses 82a starr an der Aufständereinheit 12a angeordnet. In einem unbetätigten Zustand umschließt die Verriegelungsfeder 56a das Führungselement 54a so, dass die Verriegelungsfeder 56a eine radial wirkende Verriegelungskraft auf das Führungselement 54a ausübt und so über einen Reibschluss das Führungselement 54a fixiert. In dem unbetätigten Zustand verriegelt die Verriegelungsfeder 56a den Sitzboden 38a in einer Position zu der Aufständereinheit, indem die als Schlingfeder ausgebildete Verriegelungsfeder 56a eine Kraft auf das mit dem Sitzboden 38a verbundene Führungselement 54a ausübt und dieses so über einen Reibschluss fixiert. Die Verriegelungsfeder 56a bildet einen Kraftangriffspunkt 58a aus, an dem ein Betätigungsmittel angebunden ist. Das Betätigungsmittel ist dabei als ein Bowdenzug ausgebildet. Grundsätzlich ist es auch denkbar, dass das Betätigungsmittel auf eine andere, dem Fachmann als sinnvoll erscheinende Weise ausgebildet ist. Durch eine Betätigung über das Betätigungsmittel ist die Verriegelungsfeder 56a in einen betätigten Zustand verstellbar. In dem betätigten Zustand ist die Verriegelungsfeder 56a teilweise von dem Führungselement 54a gelöst. In dem betätigten Zustand ist eine Kraft, die die Verriegelungsfeder 56a auf das Führungselement 54a ausübt, wesentlich kleiner als in dem unbetätigten Zustand, wodurch eine Reibkraft zwischen dem Führungselement 54a und der Verriegelungsfeder 56a wesentlich kleiner ist und das Führungselement 54a relativ zu der Verriegelungsfeder 56a verschiebbar ist. Die Flugzeugsitzvorrichtung weist ein zweites Betätigungselement 60a auf, das zur Betätigung der Verriegelungsfeder 56a vorgesehen ist. Das Betätigungselement 60a ist über das nicht näher dargestellte Betätigungsmittel mit der Verriegelungsfeder 56a gekoppelt. Das Betätigungselement 60a ist dazu vorgesehen, von einem auf dem Flugzeugsitz 10a sitzenden Passagier betätigt zu werden. Wird das Betätigungselement 60a betätigt, wird die Verriegelungsfeder von dem unbetätigten Zustand in den betätigten Zustand überführt. Betätigt ein Passagier das Betätigungselement 60a, ist der Sitzboden freigegeben und kann zwischen seiner Sitzstellung und Komfortstellung verstellt werden. Das Betätigungselement 60a ist als ein Druckknopf ausgebildet. Das Betätigungselement 60a ist in der Armlehne 28a angeordnet. Grundsätzlich wäre es auch denkbar, dass das Betätigungselement 60a zur Verstellung des Sitzbodens 38a in der gleichen Armlehne 26a angeordnet ist wie das Betätigungselement 36a zur Verstellung der Rückenlehne 30a. Grundsätzlich ist es auch denkbar, dass die Betätigungselemente 36a, 60a auf eine andere Art und Weise ausgebildet sind, beispielsweise als Zugelemente oder ein elektrischer/elektronischer Schalter.

Der Sitzboden 38a und die Rückenlehne 30a sind teilweise unabhängig voneinander zwischen ihren Sitzstellungen und Komfortstellungen verstellbar. Durch Betätigung des entsprechenden Betätigungselements 36a, 60a können der Sitzboden 38a und die Rückenlehne 30a unabhängig voneinander zwischen der entsprechenden Sitzstellung und der entsprechenden Komfortstellung verstellt werden. Insbesondere eine Verstellung des Sitzbodens mittels der Linearlagereinheit 42a zwischen seinen Stellungen und eine Verstellung der Rückenlehne zwischen der Sitzstellung und Komfortstellung kann unabhängig voneinander erfolgen. Lediglich eine Verstellung der Rückenlehne 30a zwischen der Sitzstellung und der Komfortstellung und eine Verstellung des Sitzbodens zwischen seiner Sitzstellung und seiner ersten Komfortstellung erfolgen gekoppelt. Grundsätzlich ist es auch denkbar, durch zeitgleiche Betätigung der Betätigungselemente 36a, 60a den Sitzboden 38a und die Rückenlehne 30a zeitgleich zu verstellen.

Die Flugzeugsitzvorrichtung umfasst ein Federelement 62a, das dazu vorgesehen ist, eine Kraft auf den Sitzboden 38a auszuüben, die dazu vorgesehen ist, eine Verstellung des Sitzbodens 38a in Richtung der zweiten, maximalen Komfortstellung zu unterstützen. Das Federelement 62a ist starr mit der Aufständereinheit 12a gekoppelt. Das Federelement 62a ist dazu vorgesehen, in einem entriegelten Zustand des Sitzbodens 38a, also wenn die Verriegelungsfeder 56a betätigt ist, eine Unterstützungskraft in Richtung der zweiten Komfortstellung auf den Sitzboden 38a auszuüben. Dadurch wird dem Passagier eine Verstellung des Sitzbodens 38a in die Komfortstellung erleichtert.

Die Flugzeugsitzvorrichtung weist ein unteres Rückenlehnenelement 64a auf. Das untere Rückenlehnenelement 64a ist in einem unteren Bereich der Rückenlehne 30a angeordnet. Das untere Rückenlehnenelement 64a erstreckt sich von einem Lendenwirbelbereich bis an den Sitzboden 38a. Das untere Rückenlehnenelement 64a ist als eine dünne Platte ausgebildet. Das untere Rückenlehnenelement 64a ist aus einem elastisch verformbaren Material gebildet. Das untere Rückenlehnenelement 64a ist flexibel, zumindest in Teilbereichen elastisch verformbar ausgebildet. Das untere Rückenlehnenelement 64a weist eine Breite auf, die im Wesentlichen einer Breite der Rückenlehnenfläche entspricht. Das untere Rückenlehnenelement 64a weist im Wesentlichen eine gleiche Kontur auf wie die Rückenlehne 30a, insbesondere wie die Bespannung der Rückenlehne 30a. Dadurch passt sich das untere Rückenlehnenelement besonders vorteilhaft an die Kontur der Rückenlehne 30a an und die Rückenlehne kann dadurch besonders komfortabel ausgebildet werden. Das untere Rückenlehnenelement 30a ist auf einer Vorderseite der Rückwand 34a der Rückenlehne 30a angeordnet. Das untere Rückenlehnenelement 64a ist dazu vorgesehen, zwischen einer Sitzstellung und einer Komfortstellung zu der Rückenlehne 30a verschwenkbar zu sein. In einer Sitzstellung ist das untere Rückenlehnenelement 64a im Wesentlichen parallel zu der Rückenlehne 30a ausgerichtet. In der Komfortstellung ist das untere Rückenlehnenelement 64a zu der Rückenlehne 30a verschwenkt. Das untere Rückenlehnenelement 64a weist in der Komfortstellung eine Neigung zu der Aufständerebene auf, die größer ist als eine Neigung der Rückenlehne 30a in ihrer Komfortstellung. Eine Neigung des unteren Rückenlehnenelements 64a liegt in einem Bereich zwischen der Neigung der Rückenlehne 30a und dem Sitzboden 38a. Es ist denkbar, dass das untere Rückenlehnenelement 64a in unterschiedlichen Teilbereichen unterschiedliche Neigungen zu der Aufständerebene aufweist. Das untere Rückenlehnenelement 64a ist in der Komfortstellung relativ zu einer im oberen Bereich des unteren Rückenlehnenelements 64a angeordneten Drehachse zu der Rückenlehne 30a verschwenkt. Die Drehachse ist dabei als eine virtuelle Drehachse ausgebildet, da es keine feste Drehlagerung zwischen dem unteren Rückenlehnenelement 64a und der Rückenlehne 30a gibt. Bei einer Verstellung des unteren Rückenlehnenelements 64a zwischen der Sitzstellung und der Komfortstellung ist das untere Rückenlehnenelement 64a dazu vorgesehen, zu der Rückenlehne 30a linear verschoben zu werden. Bei einer Verstellbewegung zwischen der Sitzstellung und der Komfortstellung wird das untere Rückenlehnenelement 64a sowohl linear zu der Rückenlehne 30a verschoben als auch zu der Rückenlehne 30a verschwenkt. In der Komfortstellung ist das untere Rückenlehnenelement 64a im Vergleich zu seiner Sitzstellung in Sitzrichtung nach vorne bewegt. Dabei ist insbesondere ein unterer, dem Sitzboden 38a zugewandter Bereich des unteren Rückenlehnenelements 64a um einen größeren Abstand nach vorne bewegt als ein oberer Bereich des unteren Rückenlehnenelements 64a. Dadurch kann eine besonders vorteilhafte Abstützung eines unteren Rückenbereichs eines Passagiers in der Komfortposition erfolgen. In einem oberen Bereich ist das untere Rückenlehnenelement 64a flexibler ausgebildet als in einem mittleren und unteren Bereich. Durch die flexiblere Ausgestaltung in dem oberen Bereich kann sich das untere Rückenlehnenelement 64a besonders vorteilhaft bei einer Verstellung zwischen der Sitzstellung und der Komfortstellung an die Rückenlehne 30a, auf der es aufliegt, anpassen.

Das untere Rückenlehnenelement 64a ist dazu vorgesehen, führungselementlos an der Rückenlehne 30a gelagert zu sein. Zwischen dem unteren Rückenlehnenelement 64a und der Rückenlehne 30a gibt es keine Führungselemente, die das untere Rückenlehnenelement 64a exakt zu der Rückenlehne 30a führen. Das untere Rückenlehnenelement 64a stützt sich auf einer nach vorne gerichteten Seite der Rückwand 34a der Rückenlehne 30a ab. Dadurch ist das untere Rückenlehnenelement 64a mit seinem oberen Bereich an der Rückwand 34a der Rückenlehne 30a abgestützt. Das untere Rückenlehnenelement 64a gleitet mit einem oberen Bereich auf der Vorderseite der Bespannung der Rückenlehne 30a ab. Grundsätzlich wäre es auch denkbar, dass sich das untere Rückenlehnenelement an einer nach vorne ausgerichteten Seite einer Rückwand der Rückenlehne 30a abstützt, insbesondere wenn die Rückenlehne als ein selbsttragendes Integralbauteil ausgebildet ist. Zur Verringerung eines Reibwiderstandes zwischen dem unteren Rückenlehnenelement 64a und der Bespannung der Rückenlehne 30a weist die Flugzeugsitzvorrichtung ein Taschenelement 66a auf, das zumindest einen oberen Bereich des unteren Rückenlehnenelements 64a umgibt. Das Taschenelement 66a ist aus einem abriebfesten Bezugsstoff gebildet. Das Taschenelement 66a ist in einem montierten Zustand zumindest zwischen dem unteren Rückenlehnenelement 64a und der Bespannung der Rückenlehne 30a angeordnet. Das untere Rückenlehnenelement 64a stützt sich über das Taschenelement 66a an der Rückenlehne 30a ab. Das Taschenelement 66a ist dabei taschenförmig ausgebildet und über den oberen Bereich des unteren Rückenlehnenelements 64a gestülpt. Grundsätzlich ist es auch denkbar, dass sich das untere Rückenlehnenelement 64a direkt an der Rückenlehne 30a insbesondere direkt an der Bespannung abstützt. Die Flugzeugsitzvorrichtung umfasst ein Rückenlehnenpolster, das die Rückenlehnenfläche der Rückenlehne 30a ausbildet. Das Rückenlehnenpolster ist an der Rückenlehne 30a angebunden. Das Rückenlehnenpolster ist dabei vorzugsweise über Flausch und Hakenbänder an der Rückenlehne 30a angebunden. Das Taschenelement 66a ist an einer Innenseite des Rückenlehnenpolsters fest angebunden. Dadurch ist das untere Rückenlehnenelement 64a vorteilhaft mit dem Rückenlehnenpolster gekoppelt. Grundsätzlich ist es auch denkbar, dass das Taschenelement 66a mit der Rückenlehne 30a, beispielsweise mit der Bespannung gekoppelt ist.

Das untere Rückenlehnenelement 64a ist direkt mit dem Sitzboden 38a gekoppelt. Das untere Rückenlehnenelement 64a ist mit seinem unteren Ende direkt mit dem Sitzboden 38a verbunden. Das untere Rückenlehnenelement 64a ist mit einem hinteren Ende des Sitzbodens 38a verbunden. Das untere Rückenlehnenelement 64a ist dabei gelenkig mit dem Sitzboden 38a verbunden. Das untere Rückenlehnenelement 64a weist einen Verbindungsbereich 68a auf, der fest mit dem Sitzboden 38a verbunden ist. In dem Verbindungsbereich 68a ist das untere Rückenlehnenelement 64a Verbindungselemente mit dem Sitzboden 38a verbunden. Dabei sind die Verbindungselemente als Schnellverbindungselemente ausgebildet, die vorzugsweise werkzeuglos bedienbar sind. Über die Verbindugnselemente ist das untere Rückenlehnenelement 64a lösbar mit dem Sitzboden 38a verbunden. Grundsätzlich ist es auch denkbar, dass das untere Rückenlehnenelement 64a auf eine andere Art mit dem Sitzboden 38a verbunden ist, beispielsweise durch eine Schraubverbindung oder eine Klebeverbindung. Grundsätzlich ist es auch denkbar, dass das untere Rückenlehnenelement 64a einstückig mit dem Sitzboden 38a ausgebildet ist, wie insbesondere aus einem Organoblech. Grundsätzlich ist es auch denkbar, dass das untere Rückenlehnenelement 64a mittels einer anderen Verbindungsmethode fest mit dem Sitzboden 38a verbunden ist, beispielsweise mittels einer Klebeverbindung. Das untere Rückenlehnenelement 64a weist einen Übergangsbereich 70a auf. Der Übergangsbereich 70a ist zwischen dem Verbindungsbereich 68a und einem Rest des unteren Rückenlehnenelements 64a angeordnet. Der Übergangsbereich 70a bildet eine Schwenkachse aus, über die der Rest des unteren Rückenlehnenelements 64a zu dem Verbindungsbereich 68a verschwenkt werden kann. Das untere Rückenlehnenelement 64a ist schwenkbar mit dem Sitzboden 38a gekoppelt.

Durch die direkte Koppelung des unteren Rückenlehnenelements 64a mit dem Sitzboden 38a ist das untere Rückenlehnenelement 64a dazu vorgesehen, durch eine Verstellung des Sitzbodens 38a zwischen seiner Sitzstellung und seiner ersten Komfortstellung und bei einer Verstellung des Sitzbodens 38a zwischen seiner ersten Komfortstellung und seiner zweiten Komfortstellung mit verstellt zu werden. Das untere Rückenlehnenelement 64a wird bei einer Verstellung des Sitzbodens 38a zwischen der Sitzstellung oder der zweiten Komfortstellung und der zweiten Komfortstellung automatisch in eine gleiche Stellung bewegt. Ist der Sitzboden in seiner Sitzstellung angeordnet, ist auch das untere Rückenlehnenelement 64a in seiner Sitzstellung angeordnet. Ist der Sitzboden 38a in seiner ersten Komfortstellung angeordnet, ist das untere Rückenlehnenelement 64a in einer ersten Komfortstellung angeordnet. Ist der Sitzboden 38a in seiner zweiten Komfortstellung angeordnet, ist das untere Rückenlehnenelement 64a in einer zweiten Komfortstellung angeordnet. Dabei ist das untere Rückenlehnenelement 64a in seiner zweiten Komfortstellung weiter von der Rückenlehne 30a nach vorne ausgelenkt als in der ersten Komfortstellung. Durch die Verriegelung des Sitzbodens 38a mittels der Sitzbodenverriegelung 52a ist auch das untere Rückenlehnenelement 64a stufenlos zwischen der Sitzstellung, der ersten Komfortstellung und der zweiten, maximalen Komfortstellung arretierbar.

Die Flugzeugsitzvorrichtung umfasst ein Rückwandelement 72a. Das Rückwandelement 72a begrenzt die Rückenlehne 30a in dem Bereich, in dem das untere Rückenlehnenelement 64a angeordnet ist. Das Rückwandelement 72a ist dabei einstückig mit der Rückwand 34a der Rückenlehne 30a ausgebildet. Grundsätzlich wäre es auch denkbar, dass das Rückwandelement 72a als ein separates, mit der Rückenlehne 30a verbundenes Element ausgebildet ist. Das Rückwandelement 72a ist beweglich zu dem Sitzboden 38a und dem unteren Rückenlehnenelement 64a ausgebildet. Bei einer Verstellung des Sitzbodens 38a und dadurch des unteren Rückwandelements 64a von deren Sitzstellungen in die Komfortstellungen vergrößert sich ein Abstand zwischen dem Sitzboden 38a bzw. dem unteren Rückenlehnenelement 64a und dem Rückwandelement 72a.

Der Sitzboden 38a weist ein Komfortkissen 74a auf. Das Komfortkissen 74a bildet den Sitzbereich des Flugzeugsitzes 10a aus. Das Komfortkissen 74a ist dabei als ein Schaumstoffkissen ausgebildet. Das Komfortkissen 74a weist in einem vorderen Bereich einen erhöhten Mittelbereich 76a und zwei flacher ausgebildete Seitenbereiche 78a, 80a auf. Der Mittelbereich 76a bildet einen in Querrichtung des Flugzeugsitzes 10a mittig angeordneten Höcker aus. Die Seitenbereiche 78a, 80a laufen von dem Mittelbereich 76a aus flach in Richtung von seitlichen Rändern des Komfortkissens aus. In dem Mittelbereich 76a und in den Seitenbereichen 78a, 80a weist das Komfortkissen 74a unterschiedliche Schäume auf. In den Seitenbereichen 78a, 80a ist das Komfortkissen 74a durch einen weicheren Schaum gebildet als in dem Mittelbereich 76a. Dadurch bildet das Komfortkissen 74a einen besonders vorteilhaft komfortablen Sitzbereich aus, der dem Passagier einen besonders guten Halt gibt.

Der verstellbare Sitzboden 38a und das damit verbundene untere Rückenlehnenelement 64a sind als ein Nachrüstsatz für aktuell bestehende Flugzeugsitze ausgebildet. Dabei kann ein verstellbarer Sitzboden 38a und das damit verbundene untere Rückenlehnenelement 64a insbesondere in bereits zugelassene Flugzeugsitze integriert werden, ohne dass diese neu zugelassen werden müssen.

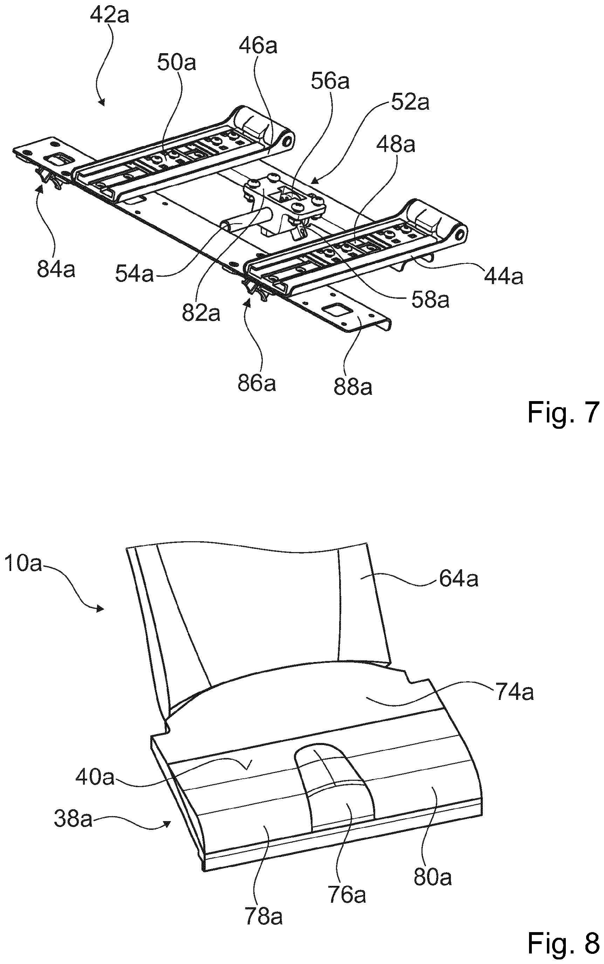

In Fig. 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 7, verwiesen werden kann. Zur Unterscheidung der Ausführungsbeispiele ist der Buchstabe a den Bezugszeichen des Ausführungsbeispiels in Fig. 1 bis 7 nachgestellt. In dem Ausführungsbeispiel der Fig. 8 ist der Buchstabe a durch den Buchstaben b ersetzt.

Figur 7 zeigt ein zweites Ausführungsbeispiel einer erfindungsgemäßen Flugzeugsitzvorrichtung. Die Flugzeugsitzvorrichtung ist als ein Teil eines Flugzeugsitzes 10b ausgebildet. Die Flugzeugsitzvorrichtung umfasst eine Aufständereinheit 12b, mittels der der Flugzeugsitz 10b auf einem Kabinenboden einer Flugzeugkabine angebracht ist. Die Flugzeugsitzvorrichtung umfasst eine Rückenlehne 30b. Die Rückenlehne 30b ist an einem hinteren Ende des Flugzeugsitzes 10b angeordnet. Die Rückenlehne 30b bildet zumindest einen Teil einer Rückenlehnenfläche aus, an der sich ein auf dem Flugzeugsitz 10b sitzender Passagier mit seinem Rücken anlehnen kann. Die Rückenlehne 30b ist verschwenkbar mit der Aufständereinheit 12b verbunden. Die Rückenlahne 30b ist dabei zwischen einer Sitzstellung und einer Komfortstellung verstellbar. Die Flugzeugsitzvorrichtung weist einen Sitzboden 38b auf. Der Sitzboden 38b bildet einen Sitzbereich 40b für einen Passagier des Flugzeugsitzes 10b aus. Der Sitzboden 38b ist mit der Aufständereinheit 12b gekoppelt. Der Sitzboden 38b ist dabei verstellbar zu der Aufständereinheit 12b angebunden. Der Sitzboden 38b ist dazu vorgesehen, zwischen einer Sitzstellung und einer Komfortstellung verstellbar gelagert zu werden. Die Flugzeugsitzvorrichtung weist ein unteres Rückenlehnenelement 64b auf. Das untere Rückenlehnenelement 64b ist in einem unteren Bereich der Rückenlehne 30b angeordnet. Das untere Rückenlehnenelement 64b ist zwischen einer Sitzstellung und einer Komfortstellung verstellbar. Das untere Rückenlehnenelement 64b ist im Wesentlichen gleich ausgebildet wie in dem ersten Ausführungsbeispiel.

Die Flugzeugsitzvorrichtung umfasst ein Rückwandelement 72b. Das Rückwandelement 72b begrenzt die Rückenlehne 30b in dem Bereich, in dem das untere Rückenlehnenelement 64b angeordnet ist. Im Unterschied zu dem ersten Ausführungsbeispiel ist das Rückwandelement 72b einstückig mit dem unteren Rückenlehnenelement 64b ausgebildet. Das Rückwandelement 72b wird von dem unteren Rückenlehnenelement 64b gebildet. Dadurch verschiebt sich das Rückwandelement 72b bei einer Verstellung des Sitzbodens 38b in seine Komfortstellung ebenfalls mit nach vorne. Da das Rückwandelement 72b die Rückenlehne 30b in dem unteren Bereich nach hinten begrenzt, wird durch die Verschiebung des Rückwandelements 72b nach vorne in die Komfortstellung ein Bereich hinter der Rückenlehne 30b für einen Passagier, der auf dem hinter dem Flugzeugsitz 10b angeordneten Flugzeugsitz sitzt, vergrößert. Ein Living Space, also ein Bereich, den ein Passagier zur Verfügung hat, kann in der Komfortstellung des Sitzbodens 38b für einen Passagier, der hinter dem Flugzeugsitz 10b sitzt, vorteilhaft erhöht werden.

### Bezugszeichen

- 10: Flugzeugsitz
- 12: Aufständereinheit
- 14: Sitzreihe
- 16: Sitzfuß
- 18: Sitzfuß
- 20: Querträger
- 22: Querträger
- 24: Sitzteiler
- 26: Armlehne
- 28: Armlehne
- 30: Rückenlehne
- 32: Rahmen
- 34: Rückwand
- 36: Betätigungselement
- 38: Sitzboden
- 40: Sitzbereich
- 42: Linearlagereinheit
- 44: Führungsschiene
- 46: Führungsschiene
- 48: Führungsschiene
- 50: Führungsschiene
- 52: Sitzbodenverriegelung
- 54: Führungselement
- 56: Verriegelungsfeder
- 58: Kraftangriffspunkt
- 60: Betätigungselement
- 62: Federelement
- 64: Rückenlehnenelement
- 66: Taschenelement
- 68: Verbindungsbereich
- 70: Übergangsbereich
- 72: Rückwandelement
- 74: Komfortkissen
- 76: Mittelbereich
- 78: Seitenbereich
- 80: Seitenbereich
- 82: Gehäuse
- 84: Lagerelement
- 86: Lagerelement
- 88: Träger

## Patentansprüche

1. Flugzeugsitzvorrichtung mit wenigstens einer Aufständereinheit (12a), einem mit der Aufständereinheit (12a) verbundenen Sitzboden (38a), der zwischen einer Sitzstellung und wenigstens einer Komfortstellung relativ zu der Aufständereinheit (12a) verstellbar ist, mit einer Rückenlehne (30a), die zwischen einer Sitzstellung und einer Komfortstellung verschwenkbar ist, und mit zumindest einem unteren Rückenlehnenelement (64a), das in einem unteren Bereich der Rückenlehne (30a) angeordnet und zumindest zwischen einer Sitzstellung und wenigstens einer Komfortstellung zumindest zu der Rückenlehne (30a) verschwenkbar ist **dadurch gekennzeichnet, dass** das wenigstens eine untere Rückenlehnenelement (64a) dazu vorgesehen ist, führungselementlos an der Rückenlehne (30a) gelagert zu sein, wobei das untere Rückenlehnenelement (64a) lediglich durch Aufliegen auf einer Fläche der Rückenlehne (30a) gelagert ist.

2. Flugzeugsitzvorrichtung nach Anspruch 1, **dadurch gekennzeichnet, dass** die Rückenlehne (30a) keine festen Lagereinheiten aufweist, über die das untere Rückenlehnenelement (64a) fest zu der Rückenlehne geführt ist.

3. Flugzeugsitzvorrichtung nach einem der vorhergehenden Ansprüche,
**gekennzeichnet durch** ein Taschenelement (66a), das zumindest einen oberen Bereich des unteren Rückenlehnenelements (64a) umgibt.

4. Flugzeugsitzvorrichtung nach einem der vorhergehenden Ansprüche,
**gekennzeichnet durch** wenigstens eine Linearlagereinheit (42a), mittels der der Sitzboden (38a) zur Ausbildung der Sitzstellung und der wenigstens zwei Komfortstellungen zwischen zwei Stellungen linear verschiebbar ist.

5. Flugzeugsitzvorrichtung nach Anspruch nach einem der vorhergehenden Ansprüche, **dadurch gekennzeichnet, dass** das untere Rückenlehnenelement (64a) direkt mit dem Sitzboden (38a) gekoppelt ist.

6. Flugzeugsitzvorrichtung nach einem der vorhergehenden Ansprüche, **dadurch gekennzeichnet, dass** das untere Rückenlehnenelement (64a) dazu vorgesehen ist, linear zu der Rückenlehne (30a) verschoben zu werden.

7. Flugzeugsitzvorrichtung nach einem der vorhergehenden Ansprüche, **dadurch gekennzeichnet, dass** das untere Rückenlehnenelement (64) dazu vorgesehen ist, durch eine Verstellung des Sitzbodens (38a) zwischen seiner Sitzstellung und der wenigstens einen Komfortstellung mit verstellt zu werden.

8. Flugzeugsitzvorrichtung nach einem der vorhergehenden Ansprüche, **dadurch gekennzeichnet, dass** der Sitzboden (38a) und die Rückenlehne (30a) zumindest teilweise unabhängig voneinander zwischen ihren Sitzstellungen und ihren Komfortstellungen verstellbar sind.

9. Flugzeugsitzvorrichtung nach einem der vorhergehenden Ansprüche,
**gekennzeichnet durch** wenigstens ein Federelement (62a), das dazu vorgesehen ist, eine Kraft auf den Sitzboden auszuüben, die dazu vorgesehen ist, eine Verstellung des Sitzbodens (38) in Richtung einer zweiten Komfortstellung zu unterstützen.

10. Flugzeugsitzvorrichtung nach einem der vorhergehenden Ansprüche,
**gekennzeichnet durch** wenigstens ein Rückwandelement (72a; 72b), das beweglich mit dem Sitzboden (38a; 38b) und/oder dem unteren Rückenlehnenelement (64a; 64b) gekoppelt ist.

11. Flugzeugsitzvorrichtung nach Anspruch 9, **dadurch gekennzeichnet, dass** das Rückwandelement (72b) einstückig mit dem unteren Rückenlehnenelement (64b) ausgebildet ist.

12. Flugzeugsitzvorrichtung nach einem der vorhergehenden Ansprüche, **dadurch gekennzeichnet, dass** der Sitzboden (38a) wenigstens ein Komfortkissen (74a) umfasst, das eine Sitzfläche ausbildet und dazu zumindest in einem vorderen Bereich einen erhöhten Mittelbereich (76a) und flacher ausgebildete Seitenbereiche (78a, 80a) aufweist.

13. Flugzeugsitz mit einer Flugzeugsitzvorrichtung nach einem der vorhergehenden Ansprüche.

## Claims

1. Aircraft seat device
with at least one mounting unit (12a),
with a seat bottom (38a) that is connected to the mounting unit (12a) and is adjustable relative to the mounting unit (12a) between a sitting position and at least one comfort position,
with a backrest (30a) that is pivotable between a sitting position and a comfort position
and with at least one lower backrest element (64a), which is arranged in a lower region of the backrest (30a) and is pivotable, at least relative to the backrest (30a), at least between a sitting position and at least one comfort position, **characterized in that** the at least one lower backrest element (64a) is configured to be supported at the backrest (30a) without a guiding element,
the lower backrest element (64a) being supported merely by lying upon a surface of the backrest (30a).

2. Aircraft seat device according to claim 1,
**characterized in that** the backrest (30a) has no fix support units via which the lower backrest element (64a) is fixedly guided relative to the backrest.

3. Aircraft seat device according to one of the preceding claims,
**characterised by** a pocket element (66a) surrounding at least an upper region of the lower backrest element (64a).

4. Aircraft seat device according to one of the preceding claims,
**characterised by** at least one linear bearing unit (42a), by means of which the seat bottom (38a) is linearly displaceable between two positions in order to form the sitting position and the at least two comfort positions.

5. Aircraft seat device according to one of the preceding claims,
**characterised in that** the lower backrest element (64a) is directly coupled with the seat bottom (38a).

6. Aircraft seat device according to one of the preceding claims,
**characterised in that** the lower backrest element (64a) is configured to be linearly displaced with respect to the backrest (30a).

7. Aircraft seat device according to one of the preceding claims,
**characterised in that** by an adjustment of the seat bottom (38a) between its sitting position and the at least one comfort position the lower backrest element (64) is configured to be adjusted as well.

8. Aircraft seat device according to one of the preceding claims,
**characterised in that** the seat bottom (38a) and the backrest (30a) are adjustable at least partially independently from each other between their sitting positions and their comfort positions.

9. Aircraft seat device according to one of the preceding claims,
**characterised by** at least one spring element (62a), which is configured to exert a force onto the seat bottom which is intended to support an adjustment of the seat bottom (38) towards a second comfort position.

10. Aircraft seat device according to one of the preceding claims,
**characterised by** at least one rear wall element (72a; 72b), which is movably coupled with the seat bottom (38a; 38b) and/or with the lower backrest element (64a; 64b).

11. Aircraft seat device according to claim 9,
**characterized in that** the rear wall element (72b) is realized integrally with the lower backrest element (64b).

12. Aircraft seat device according to one of the preceding claims,
**characterised in that** the seat bottom (38a) comprises at least one comfort cushion (74a), which forms a sitting surface and for this purpose has at least in a front region an elevated middle zone (76a) and has lateral zones (78a, 80a) which are formed so as to be rather flat.

13. Aircraft seat with an aircraft seat device according to one of the preceding claims.

## Revendications

1. Dispositif de siège d'avion
avec au moins une unité à structure élevée (12a),
avec une base de siège (38a) qui est raccordée avec la structure élevée (12a) et est ajustable par rapport à l'unité à structure élevée (12a) entre une position d'assise et au moins une position de confort, avec un dossier (30a) qui est pivotable entre une position d'assise et une position de confort
et avec au moins un élément de dossier inférieur (64a) qui est disposé dans une zone inférieure du dossier (30a) et est pivotable, au moins par rapport au dossier (30a), au moins entre une position d'assise et au moins une position de confort, **caractérisé en ce que** l'au moins un élément de dossier inférieur (64a) est destiné à être supporté au dossier (30a) sans élément de guidage,
l'élément de dossier inférieur (64a) étant supporté juste en reposant sur une surface du dossier (30a).

2. Dispositif de siège d'avion selon la revendication 1,
**caractérisé en ce que** le dossier (30a) ne comprend pas des unités de support fixes par lesquelles l'élément de dossier inférieur (64a) est fixement guidé par rapport au dossier.

3. Dispositif de siège d'avion selon l'une des revendications précédentes,
**caractérisé par** un élément de poche (66a) entourant au moins une zone supérieure de l'élément de dossier inférieur (64a).

4. Dispositif de siège d'avion selon l'une des revendications précédentes,
**caractérisé par** au moins une unité palier linéaire (42a) moyennant laquelle la base de siège (38a) est déplaçable linéairement entre deux positions pour former la position d'assise et les au moins deux positions de confort.

5. Dispositif de siège d'avion selon l'une des revendications précédentes, **caractérisé en ce que** l'élément de dossier inférieur (64a) est couplé directement avec la base de siège (38a).

6. Dispositif de siège d'avion selon l'une des revendications précédentes,
**caractérisé en ce que** l'élément de dossier inférieur (64a) est destiné à être déplacé linéairement par rapport au dossier (30a).

7. Dispositif de siège d'avion selon l'une des revendications précédentes,
**caractérisé en ce que** par un ajustement de la base de siège (38a) entre sa position d'assise et l'au moins une position de confort l'élément de dossier inférieur (64) est destiné à être ajusté conjointement.

8. Dispositif de siège d'avion selon l'une des revendications précédentes,
**caractérisé en ce que** la base de siège (38a) et le dossier (30a) sont ajustables au moins partiellement indépendamment l'une de l'autre entre leur positions d'assise et leur positions de confort.

9. Dispositif de siège d'avion selon l'une des revendications précédentes,
**caractérisé par** au moins un élément-ressort (62a) conçu pour exercer une force sur la base de siège qui est destinée à aider un ajustement de la base de siège (38a) vers une deuxième position de confort.

10. Dispositif de siège d'avion selon l'une des revendications précédentes,
**caractérisé par** au moins un élément de paroi arrière (72a ; 72b) couplé de façon mobile avec la base de siège (38a ; 38b) et/ou avec l'élément de dossier inférieur (64a ; 64b).

11. Dispositif de siège d'avion selon la revendication 9,
**caractérisé en ce que** l'élément de paroi arrière (72b) est réalisé intégralement avec l'élément de dossier inférieur (64b).

12. Dispositif de siège d'avion selon l'une des revendications précédentes,
**caractérisé en ce que** la base de siège (38a) comprend au moins un coussin de confort (74a) qui forme une surface d'assise et à cette fin comprend, au moins dans une zone avant, une zone centrale élevée (76a) et des zones latérales (78a, 80a) réalisées plutôt plates.

13. Siège d'avion avec un dispositif de siège d'avion selon l'une des revendications précédentes.
